# EUROPÄISCHE PATENTSCHRIFT

(11) **EP 2 682 650 B1**
(45) Veröffentlichungstag und Bekanntmachung des Hinweises auf die Patenterteilung: **23.03.2016**
(21) Anmeldenummer: 13174588.7
(22) Anmeldetag: 01.07.2013
(51) Int. Cl.: F16J 15/06

(54) **Strangförmiges Dichtungsprofil mit einem Dichtungsfuß**
Cord-shaped seal profile with a seal base
Profil d'étanchéité en forme de tige avec un pied de joint

(30) Priorität: 05.07.2012 DE 102012106052
(43) Veröffentlichungstag der Anmeldung: 08.01.2014
(73) Patentinhaber: IEB Gummitechnik Eisele & Co. GmbH, 64720 Michelstadt (DE)
(72) Erfinder: Eisele, Wilfried, 64732 Bad König (DE)
(74) Vertreter: Katscher Habermann Patentanwälte

(56) Entgegenhaltungen:
- US-A- 5 564 714
- US-A1- 2010 176 560

## Beschreibung

Die Erfindung betrifft ein strangförmiges Dichtungsprofil mit einem Dichtungsfuß zum Festlegen des Dichtungsprofils in einer Nut mit einem von dem Dichtungsprofil abstehenden Schenkel und mit mindestens einer von dem Schenkel seitlich abstehenden Rückhaltelippe.

Es sind aus der Praxis zahlreiche Anwendungsfälle bekannt, bei denen ein strangförmiges Dichtungsprofil an einer Oberfläche eines Objekts oder eines Profils aus einem beliebigen Material wie beispielsweise Holz, Aluminium oder Kunststoff festgelegt werden muss. Zu diesem Zweck wird oftmals entlang dem vorgesehenen Verlauf des strangförmigen Dichtungsprofils eine Nut in dem Objekt oder in dem Profil vorgesehen, in die ein Dichtungsfuß des strangförmigen Dichtungsprofils eingeführt und darin festgelegt werden kann. Der Dichtungsfuß weist üblicherweise einen von dem Dichtungsprofil abstehenden und in die Nut ragenden Schenkel auf. Um zu verhindern, dass der in die Nut eingeführte Schenkel wieder aus der Nut heraus gleiten oder durch die üblicherweise auftretenden mechanischen Beanspruchungen des strangförmigen Dichtungsprofils aus der Nut wieder herausgezogen werden kann, weist der Schenkel eine oder mehrere seitlich von dem Schenkel abstehende Rückhaltelippen auf. Die Länge der üblicherweise pfeilförmig ausgestalteten Rückhaltelippen ist dabei so bemessen, dass die Rückhaltelippen länger als ein zur Verfügung stehender Innenraum der Nut sind und bei einem Eindringen des Dichtungsfußes in die Nut an einer Seitenwand der Nut anliegen und verformt bzw. entgegen der Eindringrichtung verbogen werden. Die Endbereiche der aus einem elastischen Material ausgebildeten Rückhaltelippen werden dabei an eine Seitenwand der Nut angedrückt. Die dadurch erzeugte Haftreibung erschwert ein unbeabsichtigtes Herausziehen des Dichtungsfußes aus der Nut.

Der überwiegende Anteil der aus der Praxis bekannten Rückhaltelippen weist eine näherungsweise rechteckförmige oder trapezartige Querschnittsfläche auf und verjüngt sich mit zunehmendem Abstand von dem Schenkel. Die Rückhaltelippen werden vorzugsweise aus einem rauen bzw. gut haftenden elastischen Material hergestellt. Je größer die elastische Rückstellkraft des für die Rückhaltelippen verwendeten Materials ist, umso höher ist der seitliche Anpressdruck der verformten Endbereiche der Rückhaltelippen an die Seitenwand der Nut und desto größer kann die Rückhaltekraft sein, die einem Herauslösen des Dichtungsfußes aus der Nut entgegenwirkt.

Durch die Verwendung eines vergleichsweise harten und wenig verformbaren Materials kann der seitliche Anpressdruck der Endbereiche der Rückhaltelippen an die Seitenwand der Nut erhöht werden. Allerdings wird dadurch auch das Eindrücken des Dichtungsfußes in die Nut erschwert.

Es ist ebenfalls bekannt, mehrere Rückhaltelippen an dem Schenkel seitlich abstehen zu lassen und dadurch die Rückhaltekraft zu erhöhen. Einer oftmals nur geringfügigen Steigerung der Rückhaltekraft stehen ein erhöhter Materialaufwand und höhere Herstellungskosten gegenüber.

Dokument US 2010/0176560 A1 offenbart ein Dichtungsprofil gemäß dem Oberbegriff des Auspruchs 1.

Es wird deshalb als eine Aufgabe der vorliegenden Erfindung angesehen, einen Dichtungsfu.β für ein strangförmiges Dichtungsprofil so auszugestalten, dass mit möglichst geringem Aufwand eine möglichst große Rückhaltekraft des Dichtungsfußes in einer Nut erreicht werden kann.

Diese Aufgabe wird erfindungsgemäß dadurch gelöst, dass die Rückhaltelippe in einem dem Schenkel zugewandten Übergangsbereich eine erste Dicke d₁ aufweist und in einem mittleren Bereich der Rückhaltelippe eine zweite Dicke d₂ aufweist und dass die zweite Dicke d₂ größer als die erste Dicke d₁ ist. Im Gegensatz zu den aus der Praxis bekannten Formgebungen für Rückhaltelippen ist erfindungsgemäß vorgesehen, dass eine parallel zu einer Mittenachse des Schenkels gemessene Dicke der Rückhaltelippe mit zunehmendem Abstand von dem Schenkel nicht konstant bleibt oder stetig abnimmt, sondern zumindest in einem ersten Abschnitt zunächst zunimmt.

Die größte Verformung der Rückhaltelippe bei einem Eindringen in die Nut erfolgt in einem mittleren Bereich der Rückhaltelippe. Durch die erfindungsgemäß größere Dicke d₂ der Rückhaltelippe in diesem mittleren Bereich wird eine Verformung der Rückhaltelippe erschwert. Durch die größere Dicke d₂ muss für eine Verformung der Rückhaltelippe in diesem mittleren Bereich eine größere Verformungsarbeit geleistet werden. Bei einem elastischen Material wird auf Grund der größeren zweiten Dicke d₂ in dem mittleren Bereich eine größere Rückstellkraft und damit ein größerer Anpressdruck an eine Seitenwand der Nut erzeugt, als es mit einer kleineren Dicke, beispielsweise einer mit der ersten Dicke d₁ vergleichbaren Dicke der Fall wäre.

In vorteilhafter Weise ist vorgesehen, dass die zweite Dicke d₂ mehr als 20 % größer, vorzugsweise mehr als 50 % größer und besonders vorzugsweise mehr als 100 % größer als die erste Dicke d₁ ist. Es hat sich gezeigt, dass eine näherungsweise doppelt so dicke Ausgestaltung der Rückhaltelippe in einem mittleren Bereich verglichen mit der Dicke d₁ in der dem Schenkel zugewandten Übergangsbereich besonders gute Rückhalteeigenschaften ermöglicht.

Untersuchungen haben ergeben, dass die Formgebung der Rückhaltelippe und insbesondere die zweite Dicke d₂ in einem mittleren Bereich der Rückhaltelippe in vorteilhafterweise auf eine Länge der Rückhaltelippe abgestimmt sein sollte. Als Länge der Rückhaltelippe wird dabei die Erstreckung der Rückhaltelippe von der dem Schenkel zugewandten Übergangsbereich bis zu einem diesem Übergangsbereich gegenüberliegenden Endbereich der Rückhaltelippe bezeichnet. Es ist vorgesehen, dass die zweite Dicke d₂ mehr als 40 %, vorzugsweise mehr als 70 % und besonders vorzugsweise mehr als 100 % der Länge der Rückhaltelippe beträgt.

Die tatsächliche Breite einer Nut sowie die Formgebung des Dichtungsfußes können innerhalb der jeweiligen Maßtoleranzen schwanken. Um weitgehend unabhängig von dem in Einzelfall vorliegenden Abmessungen eine möglichst gute Rückhaltekraft des Dichtungsfußes in der Nut zu gewährleisten ist vorgesehen, dass die Rückhaltelippe einen dem Schenkel abgewandten abgerundeten Endbereich aufweist. Insbesondere bei einer Verwendung eines rauen oder haftenden elastischen Materials kann auf diese Weise erreicht werden, dass die Rückhaltelippe in dem Endbereich nicht nur punktförmig oder linienförmig an der Seitenwand der Nut anliegt, sondern im Bereich einer Andruckfläche in dem abgerundeten Endbereich flächig an der Seitenwand anliegt. Die einem Herausziehen des Dichtungsfußes aus der Nut entgegenwirkende Reibkraft wird dadurch erhöht.

Zweckmäßigerweise ist der Endbereich der Rückhaltelippe aus einem geeigneten Material hergestellt und mit einer vorteilhaft ausgestalteten Oberfläche versehen, um die Rückhaltekraft möglichst hoch vorzugeben.

Gemäß einer bevorzugten Ausgestaltung des Erfindungsgedankens ist vorgesehen, dass der Endbereich eine näherungsweise halbkreisförmige Querschnittsfläche aufweist. Unabhängig von der sich im Einzelfall tatsächlich einstellenden Verformung in der Rückhaltelippe kann ein gleichbleibend hoher Anpressdruck des Endbereichs in dem an der Seitenwand der Nut anliegenden Flächenabschnitt erreicht werden. Eine halbkreisförmig abgerundete Oberfläche leistet bei einer durch das Einführen der Rückhaltelippe in die Nut erzwungenen Verformung der Rückhaltelippe in jeder Position einen großen Widerstand.

Es stellt eine besonders vorteilhafte Formgebung der Rückhaltelippe dar, wenn die Rückhaltelippe eine näherungsweise kreisförmige oder elliptische Querschnittsfläche aufweist. Bei einer solchen Formgebung geht ein mittlerer Bereich mit einer großen zweiten Dicke d₂ vorteilhaft in einen abgerundeten Endbereich über.

Es ist vorgesehen, dass die Rückhaltelippe in dem Übergangsbereich einen von dem strangförmigen Dichtungsprofil abgewandten Oberflächenabschnitt aufweist, der einen spitzen Winkel zu einer Seitenfläche des Schenkels aufweist. Im Gegensatz zu den üblicherweise keilförmig und damit mit dem Endbereich in Richtung des strangförmigen Dichtungsprofils ausgerichtet angeordneten Rückhaltelippen ist erfindungsgemäß vorgesehen, dass die Rückhaltelippe in dem Übergangsbereich nicht zum Dichtungsprofil hin, sondern von dem Dichtungsprofil weg ausgerichtet ist. Da bei einem Eindrücken des Dichtungsfußes in die Nut der Endbereich der Rückhaltelippe zu dem Dichtungsprofil hin verformt und verbogen werden muss, wirken bei einer derartigen Formgebung besonders große Rückstellkräfte dieser Verformung entgegen. Der Anpressdruck des Endbereichs der Rückhaltelippe an die Seitenwand der Nut wird dadurch erhöht.

Die Rückhaltekraft des Dichtungsfußes in der Nut kann zusätzlich dadurch erhöht werden, dass auf einer der Rückhaltelippe gegenüber liegenden Seitenfläche des Schenkels mindestens eine vorspringende Ausformung ausgebildet ist. Auf der der Rückhaltelippe gegenüberliegenden Seite des Schenkels liegt der Schenkel dann nicht mit seiner gesamten Seitenfläche flächig an der zugeordneten Seitenwand der Nut an. Vielmehr liegt der Schenkel nur im Bereich der mindestens einen seitlich vorspringenden Ausformung an der Seitenwand der Nut an, so dass in diesem Bereich ein wesentlich höherer Anpressdruck erzeugt wird.

Es ist ebenfalls möglich, dass zwei Rückhaltelippen auf gegenüberliegenden Seiten des Schenkels einander gegenüberliegend angeordnet sind. Es können auch auf jeder Seite des Schenkels mehrere Rückhaltelippen angeordnet sein.

Nachfolgend werden Ausführungsbeispiele des Erfindungsgedankens näher erläutert, die in der Zeichnung dargestellt sind. Es zeigt:
Fig. 1 eine schematische Schnittansicht durch ein strangförmiges Dichtungsprofil mit einem Dichtungsfuß und einer seitlich abstehenden Rückhaltelippe,
Fig. 2 das in Fig. 1 dargestellte strangförmige Dichtungsprofil nach einem Einführen in eine Nut, und
Fig. 3 ein Abdichtungsprofil mit einem abweichend ausgestalteten Dichtungsfuß.

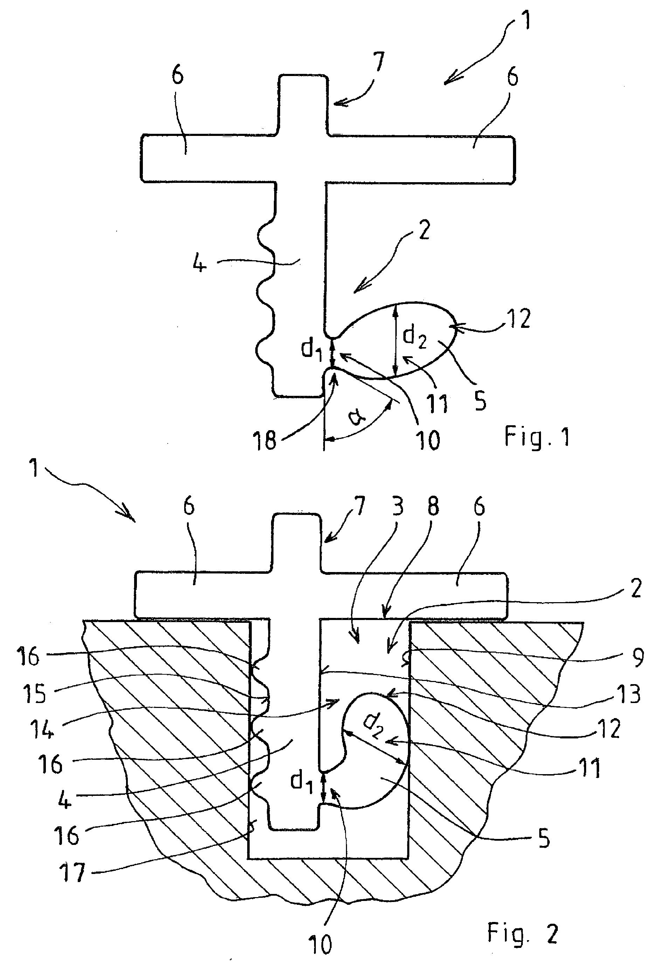

Ein in den Fig. 1 und 2 dargestelltes strangförmiges Dichtungsprofil 1 weist einen Dichtungsfuß 2 auf, mit dem das Dichtungsprofil 1 in einer nur in Fig. 2 dargestellten Nut 3 festgelegt werden kann.

Der Dichtungsfuß 2 weist einen von dem Dichtungsprofil 1 abstehenden Schenkel 4 auf, an dem eine seitlich abstehende Rückhaltelippe 5 ausgebildet ist. Der Dichtungsfuß 2 ist durch seitlich abstehende Flanschabschnitte 6 von einem Dichtungsabschnitt 7 des Dichtungsprofils 1 getrennt. Die Flanschabschnitte 6 bedecken eine Öffnung 8 der Nut 3, wenn der Dichtungsfuß 2 vollständig in die Nut 3 eingeführt und das Dichtungsprofil 1 in der Nut 3 festgelegt ist.

Die von dem Schenkel 4 seitlich in Richtung einer Seitenwand 9 abstehende Rückhaltelippe 5 weist einen dem Schenkel zugewandten Übergangsbereich 10, einen mittleren Bereich 11 und einen dem Schenkel 4 abgewandten Endbereich 12 auf. Eine Querschnittsfläche der Rückhaltelippe 5 ist näherungsweise elliptisch, wobei die elliptische Formgebung insbesondere den mittleren Bereich 11 und den Endbereich 12 umfasst und der Übergangsbereich 10 den elliptischen Bereich der Rückhaltelippe 5 mit dem Schenkel 4 verbindet.

Eine erste Dicke d₁ der Rückhaltelippe 5 in dem Übergangsbereich 10 ist näherungsweise halb so groß wie eine zweite Dicke d₂ der Rückhaltelippe 5 in dem mittleren Bereich 11. Eine Länge l der Rückhaltelippe 5 ist größer als ein Abstand zwischen der Seitenwand 9 der Nut 3 und einer dieser Seitenwand 9 zugewandten Seitenfläche 13 des Schenkels 4. Bei einem Eindrücken des Dichtungsfußes 2 in die Nut 3 wird deshalb eine Verformung der Rückhaltelippe 5 erzwungen. Während in dem Übergangsbereich 10 und in dem Endbereich 12 lediglich eine geringe Verformung der Rückhaltelippe 5 erfolgt, wird in dem mittleren Bereich 11 mit der großen Dicke d₂ die größte Verformung der Rückhaltelippe 5 erzwungen.

Die zweite Dicke d₂ ist dabei so groß vorgegeben, dass die in der Nut 3 eingedrückte und dadurch verformte Rückhaltelippe 5 einen zwischen der Seitenfläche 13 des Schenkels 4 und der Seitenwand 9 der Nut 3 verbleibenden Innenraum 14 mehr als zur Hälfte ausfüllt.

Wenn der Dichtungsfuß 2 wieder aus der Nut 3 herausgezogen wird, muss die Rückhaltelippe 5 derart stark verformt werden, dass der Übergangsbereich 10 der Rückhaltelippe 5 über den an der Seitenwand 9 der Nut 3 angedrückten mittleren Bereich 11 hinweg verlagert und aus der Nut 3 herausgezogen wird. Die hierfür erforderliche Verformungsenergie ist erheblich. Einem unbeabsichtigten Herauslösen oder Herausziehen des Dichtungsfußes 2 aus der Nut 3 wirkt deshalb eine sehr hohe Rückhaltekraft entgegen.

Auf einer der Rückhaltelippe 5 gegenüberliegenden Seitenfläche 15 des Schenkels 4 sind beabstandet zueinander 3 seitlich vorspringende Ausformungen 16 angeordnet. Die seitlich vorspringenden Ausformungen 16 bilden eine vergleichsweise geringe Andruckfläche, mit der der Schenkel 4 an einer zugeordneten Seitenwand 17 der Nut 3 angedrückt wird. Der auf der gegenüberliegenden Seite durch die Verformung der Rückhaltelippe 5 erzeugte Anpressdruck im Bereich der Ausformungen 16 auf die Seitenwand 17 ist dadurch höher als bei einer ebenen Ausgestaltung der Seitenfläche 15 und einem vollflächigen Anliegen des Schenkels 4 an der Seitenwand 17.

Die Rückhaltekraft wird zusätzlich dadurch erhöht, dass die Rückhaltelippe (5) in dem Übergangsbereich (10) einen von dem strangförmigen Dichtungsprofil (1) abgewandten Oberflächenabschnitt (18) aufweist, der einen spitzen Winkel α zu einer Seitenfläche (13) des Schenkels (4) aufweist.

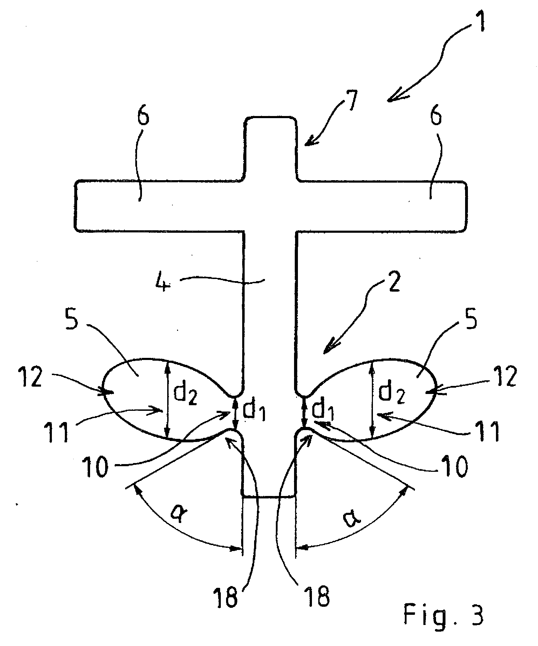

Bei einem in Fig. 3 exemplarisch dargestellten Ausführungsbeispiel weist das strangförmige Dichtungsprofil 1 mit dem Dichtungsfuß 2 zwei Rückhaltelippen 5 auf, die auf gegenüberliegenden Seiten des Schenkels 4 einander gegenüberliegend angeordnet sind.

## Patentansprüche

1. Strangförmiges Dichtungsprofil (1) mit einem Dichtungsfuß (2) zum Festlegen des Dichtungsprofils (1) in einer Nut (3) mit einem von dem Dichtungsprofil (1) abstehenden Schenkel (4) und mit mindestens einer von dem Schenkel (4) seitlich abstehenden Rückhaltelippe (5), dass die Rückhaltelippe (5) in einem dem Schenkel (4) zugewandten Übergangsbereich (10) eine erste Dicke (d₁) aufweist und in einem mittleren Bereich (11) der Rückhaltelippe (5) eine zweite Dicke (d₂) aufweist,
**dadurch gekennzeichnet**, und dass die zweite Dicke (d₂) größer als die erste Dicke (d₁) ist.

2. Strangförmiges Dichtungsprofil (1) nach Anspruch 1, **dadurch gekennzeichnet, dass** die zweite Dicke (d₂) mehr als 20 % größer, vorzugsweise mehr als 50 % größer und besonders vorzugsweise mehr als 100 % größer als die erste Dicke (d₁) ist.

3. Strangförmiges Dichtungsprofil (1) nach Anspruch 1 oder Anspruch 2, **dadurch gekennzeichnet, dass** die zweite Dicke (d₂) mehr als 40 %, vorzugsweise mehr als 70 % und besonders vorzugsweise mehr als 100 % einer Länge der Rückhaltelippe (5) beträgt.

4. Strangförmiges Dichtungsprofil (1) nach einem der vorangehenden Ansprüche, **dadurch gekennzeichnet, dass** die Rückhaltelippe (5) einen dem Schenkel (4) abgewandten abgerundeten Endbereich (12) aufweist.

5. Strangförmiges Dichtungsprofil (1) nach Anspruch 4, **dadurch gekennzeichnet, dass** der Endbereich (12) eine näherungsweise halbkreisförmige Querschnittsfläche aufweist.

6. Strangförmiges Dichtungsprofil (1) nach einem der vorangehenden Ansprüche, **dadurch gekennzeichnete, dass** die Rückhaltelippe (5) eine näherungsweise kreisförmige oder elliptische Querschnittsfläche aufweist.

7. Strangförmiges Dichtungsprofil (1) nach einem der vorangehenden Ansprüche, **dadurch gekennzeichnet, dass** die Rückhaltelippe (5) in dem Übergangsbereich (10) einen von dem strangförmigen Dichtungsprofil (1) abgewandten Oberflächenabschnitt (18) aufweist, der einen spitzen Winkel zu einer Seitenfläche (13) des Schenkels (4) aufweist.

8. Strangförmiges Dichtungsprofil (1) nach einem der vorangehenden Ansprüche, **dadurch gekennzeichnet, dass** auf einer der Rückhaltelippe (5) gegenüberliegenden Seitenfläche (15) des Schenkels (4) mindestens eine vorspringende Ausformung (16) ausgebildet ist.

9. Strangförmiges Dichtungsprofil (1) nach einem der vorangehenden Ansprüche 1 bis 7, **dadurch gekennzeichnet, dass** zwei Rückhaltelippen (5) auf gegenüberliegenden Seiten des Schenkels (4) einander gegenüberliegend angeordnet sind.

## Claims

1. Cord-shaped seal profile (1) with a seal base (2) for fixing the seal profile (1) in a groove (3), with a limb (4) protruding from the seal profile (1) and with at least one retaining lip (5) protruding laterally from the limb (4), in that the retaining lip (5) has a first thickness (d₁) in a transition region (10) facing the limb (4), and has a second thickness (d₂) in a central region (11) of the retaining lip (5), characterized and in that the second thickness (d₂) is greater than the first thickness (d₁).

2. Cord-shaped seal profile (1) according to Claim 1, **characterized in that** the second thickness (d₂) is more than 20% greater, preferably more than 50% greater and particularly preferably more than 100% greater than the first thickness (d₁).

3. Cord-shaped seal profile (1) according to Claim 1 or 2, **characterized in that** the second thickness (d₂) is more than 40%, preferably more than 70% and particularly preferably more than 100% of a length of the retaining lip (5).

4. Cord-shaped seal profile (1) according to one of the preceding claims, **characterized in that** the retaining lip (5) has a rounded end region (12) facing away from the limb (4).

5. Cord-shaped seal profile (1) according to Claim 4, **characterized in that** the end region (12) has an approximately semicircular cross-sectional area.

6. Cord-shaped seal profile (1) according to one of the preceding claims, **characterized in that** the retaining lip (5) has an approximately circular or elliptical cross-sectional area.

7. Cord-shaped seal profile (1) according to one of the preceding claims, **characterized in that**, in the transition region (10), the retaining lip (5) has a surface portion (18) which faces away from the cord-shaped seal profile (1) and is at an acute angle to a side surface (13) of the limb (4).

8. Cord-shaped seal profile (1) according to one of the preceding claims, **characterized in that** at least one projecting formation (16) is formed on a side surface (15) of the limb (4), which side surface is opposite the retaining lip (5).

9. Cord-shaped seal profile (1) according to one of the preceding Claims 1 to 7, **characterized in that** two retaining lips (5) are arranged lying opposite each other on opposite sides of the limb (4).

## Revendications

1. Profilé d'étanchéité (1) en forme de tige avec un pied de joint (2) permettant de fixer le profilé d'étanchéité (1) dans une rainure (3) avec un côté (4) saillant hors du profilé d'étanchéité (1) et avec au moins une lèvre de retenue (5) saillant en côté hors du côté (4), en ce que la lèvre de retenue (5) présente dans une zone de transition (10) orientée vers le côté (4) une première épaisseur (d₁) et présente dans une zone centrale (11) de la lèvre de retenue (5) une deuxième épaisseur (d₂),
**caractérisé en ce que** et la deuxième épaisseur (d₂) est supérieure à la première épaisseur (d₁).

2. Profilé d'étanchéité (1) en forme de tige selon la revendication 1, **caractérisé en ce que** la deuxième épaisseur (d₂) est plus de 20 % plus grande, de préférence plus de 50 % plus grande et de façon particulièrement préférée plus de 100 % plus grande que la première épaisseur (d₁).

3. Profilé d'étanchéité (1) en forme de tige selon la revendication 1 ou 2, **caractérisé en ce que** la deuxième épaisseur (d₂) représente plus de 40 %, de préférence plus de 70 % et de façon particulièrement préférée plus de 100 % d'une longueur de la lèvre de retenue (5).

4. Profilé d'étanchéité (1) en forme de tige selon l'une quelconque des revendications précédentes, **caractérisé en ce que** la lèvre de retenue (5) présente une zone d'extrémité (12) arrondie opposée au côté (4).

5. Profilé d'étanchéité (1) en forme de tige selon la revendication 4, **caractérisé en ce que** la zone d'extrémité (12) présente une surface de section transversale approximativement en forme de demi-cercle.

6. Profilé d'étanchéité (1) en forme de tige selon l'une quelconque des revendications précédentes, **caractérisé en ce que** la lèvre de retenue (5) présente une surface de section transversale approximativement en forme de cercle ou d'ellipse.

7. Profilé d'étanchéité (1) en forme de tige selon l'une quelconque des revendications précédentes, **caractérisé en ce que** la lèvre de retenue (5) présente dans la zone de transition (10) une section de surface opposée (18) par rapport au profilé d'étanchéité (1) en forme de tige comportant un angle aigu par rapport à une surface latérale (13) du côté (4).

8. Profilé d'étanchéité (1) en forme de tige selon l'une quelconque des revendications précédentes, **caractérisé en ce qu'**au moins une formation (16) saillante est réalisé sur une surface latérale (15), opposée de la lèvre de retenue (5), du côté (4).

9. Profilé d'étanchéité (1) en forme de tige selon l'une quelconque des revendications précédentes 1 à 7, **caractérisé en ce que** deux lèvres de retenue (5) sont disposées de façon opposée sur les côtés opposés du côté (4).
